# EUROPÄISCHE PATENTANMELDUNG

(11) **EP 3 622 807 A1**
(43) Veröffentlichungstag der Anmeldung: **18.03.2020**
(21) Anmeldenummer: 18193927.3
(22) Anmeldetag: 12.09.2018
(51) Int. Cl.: A01G 5/00, A01D 45/16

(54) **VORRICHTUNG ZUM ENTFERNEN VON BLÄTTERN UND BLÜTEN VON PFLANZEN**

(71) Anmelder: Alcontec GmbH, 6235 Winikon (CH)
(72) Erfinder: Gafner, Peter, 5723 Teufenthal (CH); Freund, Thomas, 6130 Willisau (CH); Kurmann, Remo, 6010 Kriens (CH); Theiler, Michael, 5057 Reitnau (CH)
(74) Vertreter: Herrmann, Johanna

(57) **Zusammenfassung**

Eine Vorrichtung (1) zur Verarbeitung von Pflanzen umfasst eine Abstreifeinheit (2) zur Zufuhr eines Stängels einer zu verarbeitenden Pflanze, sowie eine Einzugseinheit (3) zur Aufnahme und zum Transport eines Stängels der Pflanze. Die Einzugseinheit (3) umfasst mindestens ein erstes Rollenelement (11, 13) und ein zweites Rollenelement (12) und mindestens eine Antriebseinheit (14) zum Antrieb zumindest einer der ersten oder zweiten Rollenelemente (11, 12, 13). Der Anpressdruck, welcher vom ersten Rollenelement (11, 13) auf das zweite Rollenelement (12) wirkt, ist mittels eines Justiersystems (4) einstellbar.

## Beschreibung

### Hintergrund

Die vorliegende Erfindung betrifft eine Vorrichtung zur Pflanzenverarbeitung. Insbesondere betrifft die Erfindung eine Vorrichtung zur Verarbeitung von Hanf.

Verschiedenste Nutzpflanzen enthalten Bestandteile, die für die Verarbeitung vorgesehen sind. Diese Pflanzen enthalten aber auch Bestandteile, für welche die Verarbeitung nicht vorgesehen ist oder eine andere Verarbeitung erforderlich ist.

Beispielsweise sind bei Tabakpflanzen nur die Blätter der Pflanzen für die Weiterverarbeitung erwünscht, bei Cannabispflanzen oder Hanf, deren Blätter und/oder Knospen oder Blüten oder deren Stängel. Eine manuelle Trennung der Blätter oder Knospen oder Blüten von den Stängeln ist möglich, aber zeitraubend, daher für grössere Anbauflächen unwirtschaftlich. Aus diesem Grund gab es in der Vergangenheit bereits Ansätze, diesen Arbeitsschritt zu automatisieren. Im Rahmen dieser Automatisierung müssen die Blätter und/oder Blüten dieser Pflanzen mittels einer Vorrichtung von den Stängeln getrennt werden. Das Abstreifen der Blüten einer Hanfpflanze ist grundsätzlich trivial. Eine Pflanze wird von einer Einzugseinheit durch eine Abstreifeinheit gezogen. Die Einzugseinheit und Abstreifeinheit können unterschiedlich ausgestaltet sein, was auf die Qualität der Blüten wenig Einfluss hat. Die Einzugseinheit und die Abstreifeinheit haben jedoch Einfluss auf die Qualität der Stängel.

Zusätzlich besteht die Herausforderung, dass Pflanzen mit unterschiedlichen Feuchtegraden verarbeitet werden müssen, die sortenabhängig, abhängig vom Reifegrad oder abhängig vom Erntezustand der Pflanze sein können.

Die Verarbeitung der Pflanzen soll daher möglichst schonend erfolgen. Andererseits besteht die Tendenz, die Verarbeitung innerhalb der kürzest möglichen Zeit zu beenden, damit einerseits die Pflanzen mit möglichst hohem Frischegrad verarbeitet werden können und andererseits der Verarbeitungsprozess möglichst kostengünstig erfolgen kann.

### Stand der Technik

Eine Vorrichtung zur Verarbeitung von Cannabispflanzen ist beispielsweise aus der WO2018048503 A1 bekannt. Diese Vorrichtung enthält einen Rahmen, in welchem zwei gegenläufig drehbare Rollen angeordnet sind, zwischen denen ein Stängel aufgenommen und gefördert werden kann. Die Cannabispflanze, umfassend den Stängel mit den Blättern und Knospen, wird den Rollen über eine Öffnung zugeführt, wobei beim Durchtritt des Stängels durch die Öffnung die Blätter und Knospen vom Stängel abgestreift werden, d.h. eine Trennung der Blätter und Knospen vom Stängel erfolgt. Wenn der Durchmesser der Rollen, die beispielsweise als Luftreifen ausgebildet sein können, ungefähr 610 mm beträgt und deren Breite ungefähr 216 mm beträgt, hat sich eine Distanz von 152 mm zwischen der Öffnung und dem Aufnahmepunkt des Stängels zwischen den Rollen als Optimum bewährt. In der WO2018048503 A1 ist auch die Möglichkeit erwähnt, Öffnungen verschiedener Grösse für unterschiedlich dicke Stängel einzusetzen, damit Cannabispflanzen mit Stängeln unterschiedlicher Dicke auf derselben Vorrichtung verarbeitet werden können. Die Cannabispflanzen werden von der Bedienperson manuell in die entsprechende Öffnung gesteckt und in die Öffnung hineingeschoben, bis der Stängel von den beiden Rollen erfasst und durch die Rollen weiter gefördert wird.

Ein Nachteil der vorbekannten Vorrichtung ist darin begründet, dass die Stängel einzeln nacheinander verarbeitet werden müssen.

Es besteht nach wie vor Bedarf an einer Vorrichtung zur Unterstützung der Handarbeit, die einen kompakteren Aufbau hat. Viele der am Markt erhältlichen Hanfverarbeitungsmaschinen sind noch zu gross, zu schwer und zu teuer für den Einzelanwender.

### Aufgabe der Erfindung

Es ist Aufgabe der Erfindung, eine Vorrichtung zu entwickeln, mittels welcher mehrere, mindestens zwei Stängel, parallel zueinander verarbeitet werden können.

Eine weitere Aufgabe der Erfindung besteht darin, eine Vorrichtung zu entwickeln, die kompakter als die vorbekannten Vorrichtungen ist. Insbesondere kann mit der vorliegenden Vorrichtung der Bauraum optimal genutzt werden, das heisst, zur Erzielung eines bestimmten Durchsatzes an Pflanzen wird im Vergleich zum Stand der Technik ein wesentlich geringerer Bauraum benötigt.

Eine weitere Aufgabe der Erfindung besteht darin, eine Vorrichtung zu entwickeln, die leichter als die vorbekannten Vorrichtungen ist.

### Beschreibung der Erfindung

Die Lösung der Aufgabe der Erfindung erfolgt durch eine Vorrichtung gemäss Anspruch 1. Vorteilhafte Ausführungsbeispiele der Vorrichtung sind Gegenstand der Ansprüche 2 bis 15.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für die erfindungsgemässe Vorrichtung. Die Beschreibung einer bestimmten Vorrichtung ist nur als beispielhaft anzusehen. In der Beschreibung und den Ansprüchen werden die Begriffe "enthalten", "umfassen", "aufweisen" als "enthalten, aber nicht beschränkt auf" interpretiert.

Im Folgenden wird der Begriff Rollenelement für einen drehbaren rotationssymmetrischen Körper verwendet, wie beispielsweise eine Rolle, Walze, Zylinder.

Im Folgenden wird der Begriff Öffnung für Öffnungen beliebigen Querschnitts verwendet. Insbesondere kann eine Öffnung einen kreisförmigen oder ovalen Querschnitt aufweisen.

Der Begriff Antriebseinheit umfasst manuelle Antriebseinheiten, elektrische Antriebseinheiten, hydraulische Antriebseinheiten, pneumatische Antriebseinheiten oder Antriebseinheiten, die mittels Verbrennungskraftmaschinen betrieben werden.

Eine Vorrichtung zur Verarbeitung von Pflanzen umfasst eine Abstreifeinheit zur Zufuhr eines Stängels einer zu verarbeitenden Pflanze, sowie einer Einzugseinheit zur Aufnahme und zum Transport eines Stängels der Pflanze, wobei die Einzugseinheit mindestens ein erstes Rollenelement und ein zweites Rollenelement umfasst und mindestens eine Antriebseinheit zum Antrieb zumindest einer der ersten oder zweiten Rollenelemente. Der Anpressdruck, welcher vom ersten Rollenelement auf das zweite Rollenelement wirkt, ist mittels eines Justiersystems einstellbar. Insbesondere umfasst das Justiersystem eine Justiervorrichtung, wobei mittels der Justiervorrichtung ein Anpressdruck auf einen zwischen dem ersten Rollenelement und dem zweiten Rollenelement befindlichen Stängel erzeugbar ist.

Nach einem Ausführungsbeispiel ist die Justiervorrichtung mit dem ersten Rollenelement und einem ortsfesten Gehäuse verbunden. Die Justiervorrichtung kann ein Federelement und ein Justierelement enthalten, wobei das Federelement und das Justierelement auf einer Halterung des Rollenelements und am Gehäuse befestigt sind.

Die Justiervorrichtung kann nach einem Ausführungsbeispiel ein Federelement, ein Justierelement und ein Führungselement enthalten, wobei das Federelement und das Führungselement auf einem Verbindungselement befestigt sind und das Federelement auf einer Halterung des Rollenelements befestigt ist, und das Führungselement am Gehäuse befestigt ist. Insbesondere kann das Federelement und das Führungselement an einem ersten Ende auf einem Verbindungselement befestigt sein und das Federelement an einem zweiten Ende auf einer Halterung des Rollenelements befestigt sein und das Führungselement an einem ersten Ende am Gehäuse befestigt sein.

Nach einem Ausführungsbeispiel ist die Antriebseinheit im Inneren eines der ersten oder zweiten Rollenelemente angeordnet. Insbesondere kann die Antriebseinheit einen Trommelmotor umfassen.

Nach einem Ausführungsbeispiel enthält die Abstreifeinheit zumindest ein Abstreifelement. Das Abstreifelement enthält insbesondere mindestens eine Öffnung zur Einführung eines Stängels der Pflanze.

Nach einem Ausführungsbeispiel umfasst das Abstreifelement ein Balkenelement, welches die Öffnung enthält, wobei das Balkenelement abnehmbar ist.

Nach einem Ausführungsbeispiel ist die Einzugseinheit von der Abstreifeinheit trennbar. Hierdurch ist gewährleistet, dass die Vorrichtung für Reinigungszwecke einfach zugänglich ist. Bei einer Störung können Pflanzenteile aus dem Zwischenraum zwischen Einzugseinheit und Abstreifeinheit entnommen werden.

Nach einem Ausführungsbeispiel weisen das erste Rollenelement und das zweite Rollenelement zueinander parallel verlaufende Drehachsen auf.

Nach einem Ausführungsbeispiel enthält die Abstreifeinheit ein drittes Rollenelement. Das erste und zweite Rollenelement bilden ein erstes Rollenelementpaar aus. Das zweite und dritte Rollenelement bilden ein zweites Rollenelementpaar aus. Durch die Verwendung von zwei Rollenelementpaaren können je zwei Pflanzen parallel verarbeitet werden. Je ein Stängel wird vom ersten Rollenelementpaar erfasst. Zur selben Zeit wird ein weiterer Stängel vom zweiten Rollenelementpaar erfasst.

Gemäss einem Ausführungsbeispiel werden mehr als zwei Rollenelementpaare verwendet.

Insbesondere kann das dritte Rollenelement eine Drehachse aufweisen, die mit der Drehachse des ersten Rollenelements übereinstimmt. Insbesondere kann sich die Drehrichtung des ersten Rollenelements von der Drehrichtung des zweiten Rollenelements unterscheiden.

Nach einem Ausführungsbeispiel weist das zweite Rollenelement eine Breite auf, die grösser oder gleich der Breite des ersten Rollenelements ist.

Nach einem Ausführungsbeispiel unterscheidet sich der Durchmesser des ersten Rollenelements vom Durchmesser des zweiten Rollenelements. Insbesondere können die Durchmesser der ersten und dritten Rollenelemente gleich sein.

Die Rollenelemente jedes Rollenelementpaars können unterschiedliche Abstände haben, um flexibler auf unterschiedliche Pflanzendurchmesser zu reagieren.

Die Rollenelemente können nach einem Ausführungsbeispiel unterschiedlich beschichtet sein, um auf eine unterschiedliche Oberflächenbeschaffenheit flexibel reagieren zu können.

Insbesondere können mittels der Vorrichtung nach einem der Ausführungsbeispiele Cannabispflanzen verarbeitet werden.

### Kurzbeschreibung der Zeichnungen

Nachfolgend werden die erfindungsgemässen Vorrichtungen anhand einiger Ausführungsbeispiele dargestellt. Es zeigen
Fig. 1a eine Ansicht einer Abstreifeinheit einer Vorrichtung nach einem ersten Ausführungsbeispiel von der Vorderseite,
Fig. 1b eine Ansicht einer Einzugseinheit der Vorrichtung nach dem ersten Ausführungsbeispiel von der Vorderseite,
Fig. 2a eine Ansicht der Abstreifeinheit nach dem ersten Ausführungsbeispiel von der Rückseite,
Fig. 2b eine Ansicht einer Abdeckung für die Vorrichtung nach dem ersten Ausführungsbeispiel von der Rückseite,
Fig. 3 ein Detail eines Abstreifelementes für eine Vorrichtung nach dem ersten Ausführungsbeispiel,
Fig. 4 eine Ansicht der Rückseite einer Vorrichtung gemäss dem ersten Ausführungsbeispiel,
Fig. 5 eine Aufsicht auf eine Vorrichtung gemäss dem ersten Ausführungsbeispiel,
Fig. 6 eine Seitenansicht einer Vorrichtung gemäss dem ersten Ausführungsbeispiel,
Fig. 7a ein Rollenelement nach einem der vorhergehenden Ausführungsbeispiele,
Fig. 7b eine Seitenansicht des Rollenelements gemäss Fig. 7a,
Fig. 7c eine zweite Seitenansicht des Rollenelements gemäss Fig. 7a,
Fig. 7d einen Schnitt durch das Rollenelement gemäss Fig. 7a,
Fig. 8a eine Ansicht einer Vorrichtung gemäss einem zweiten Ausführungsbeispiel,
Fig. 8b einen Schnitt durch die Vorrichtung gemäss Fig. 8a.

### Detaillierte Beschreibung der Zeichnungen

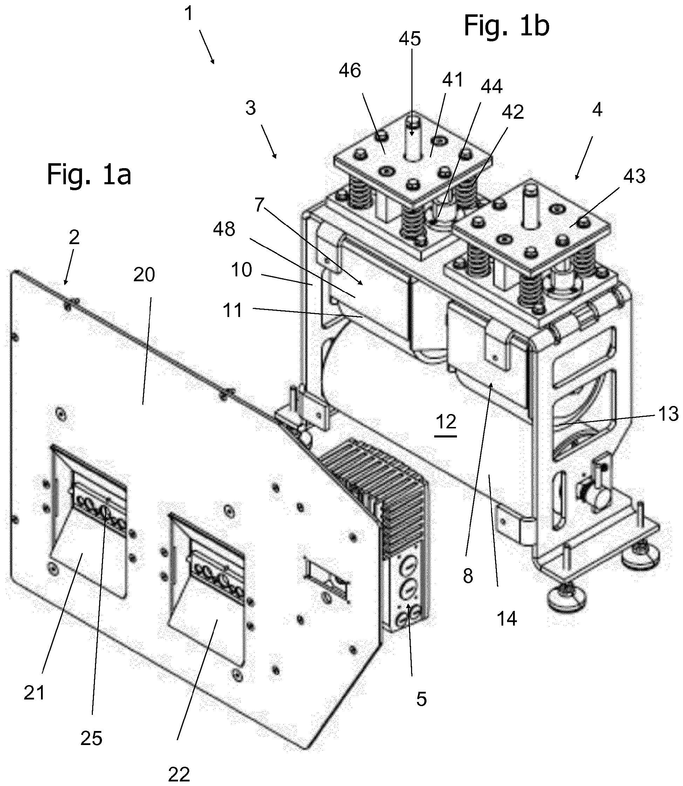

Fig. 1a zeigt eine Ansicht einer Abstreifeinheit 2 für eine Vorrichtung 1 nach dem ersten Ausführungsbeispiel von der Vorderseite. Unter der Vorderseite der Vorrichtung 1 wird die Seite verstanden, auf welcher die Pflanzen, also das Rohmaterial, in die Vorrichtung 1 eingeführt werden. Die verwertbaren Pflanzenteile, insbesondere Blüten oder Blätter, werden ebenfalls auf der Vorderseite der Vorrichtung 1 gewonnen. Fig. 1b zeigt eine Ansicht einer Einzugseinheit 3 der Vorrichtung 1 nach dem ersten Ausführungsbeispiel von der Vorderseite. Die Fig. 1a und Fig. 1b zeigen somit Bestandteile derselben Vorrichtung. Fig. 1a und Fig. 1b werden daher in der nachfolgenden Beschreibung gemeinsam beschrieben. Die Abstreifeinheit 2 und die Einzugseinheit 3 sind im nicht zusammengebauten Zustand dargestellt, um die Einzelheiten besser sichtbar zu machen.

Die Vorrichtung 1 zur Verarbeitung von Pflanzen umfasst somit die Abstreifeinheit 2 zur Zufuhr eines Stängels einer zu verarbeitenden Pflanze, sowie die Einzugseinheit 3 zur Aufnahme und zum Transport des Stängels oder der Stängel. Die Einzugseinheit 3 umfasst mindestens ein erstes Rollenelement 11 und ein zweites Rollenelement 12 und mindestens eine Antriebseinheit 14 zum Antrieb zumindest eines der ersten oder zweiten Rollenelemente 11, 12. Die Einzugseinheit 3 der Vorrichtung 1 gemäss Fig. 1b umfasst ein Gehäuse 10, enthaltend ein erstes, zweites und drittes Rollenelement 11, 12, 13 mit zueinander parallel verlaufenden Drehachsen. Mindestens eine Antriebseinheit 14 zum Antrieb zumindest einer der ersten, zweiten oder dritten Rollenelemente 11, 12, 13 ist vorgesehen. Die Antriebseinheit 14 ist in der vorliegenden Darstellung nicht sichtbar, da sie sich im Inneren des zweiten Rollenelements 12 befindet. Die Antriebseinheit 14 könnte sich gemäss einem nicht dargestellten Ausführungsbeispiel auch im Inneren des ersten oder dritten Rollenelements 11, 13 befinden.

Die Abstreifeinheit 2 gemäss Fig. 1a enthält eine Abdeckung 20, die gemäss diesem Ausführungsbeispiel als Plattenelement ausgebildet ist, beispielsweise ein Schutzschild. Die Abdeckung 20 enthält ein oder mehrere Abstreifelemente 21, 22 zur Zufuhr einer oder mehrerer Pflanzen. Jedes der Abstreifelemente 21, 22 weist mindestens eine Öffnung 25 zum Einführen eines Stängels in die Vorrichtung 1 auf. Die Öffnungen 25 können für Stängel unterschiedlicher Dicke vorgesehen sein. Der Stängel wird durch die seiner Dicke entsprechende Öffnung 25 in den Innenraum der Vorrichtung 1 solange eingeführt, bis er von den Rollenelementen 11, 12, 13 der Einzugseinheit 3 erfasst wird. Gemäss dem vorliegenden Ausführungsbeispiel umfasst jedes der Abstreifelemente 21, 22 eine Mehrzahl von Öffnungen 25 unterschiedlicher Querschnittsfläche. Daher können Stängel unterschiedlicher Dicke mit derselben Vorrichtung verarbeitet werden. In Fig. 1a ist nur eine der Öffnungen mit dem Bezugszeichen 25 versehen, um die Darstellung nicht unnötig zu überladen.

Die Abdeckung 20 kann einfach vom Gehäuse 10 abgenommen und bei Bedarf ausgetauscht werden. Zusätzlich kann eine Einhausung für die Einzugseinheit 3 vorgesehen sein, welche beispielsweise zum Zweck der Erhöhung der Arbeitssicherheit oder für den Lärmschutz verwendet werden kann. Diese Einhausung ist in den vorliegenden Abbildungen nicht gezeigt, um die Sicht auf die Abstreifeinheit 2 sowie die Einzugseinheit 3 der Vorrichtung 1 nicht zu beeinträchtigen.

Alternativ oder in Ergänzung hierzu kann jedes der Balkenelemente 28 abnehmbar ausgebildet sein. Wenn beispielsweise ein Balkenelement 28 verstopft oder verschmutzt ist, kann dieses Balkenelement einfach ausgetauscht werden und durch ein anderes Balkenelement ersetzt werden, welches an Lager gehalten wird. Der Austausch des Balkenelementes kann innerhalb einer kurzen Zeitspanne von einigen Sekunden, insbesondere maximal 10 Sekunden, erfolgen. Der Reinigungsvorgang des verstopften oder verschmutzten Balkenelementes 28 kann zu einem beliebigen Zeitpunkt erfolgen, ohne dass hierdurch der Betrieb der Vorrichtung 1 beeinträchtigt wird. Hiermit können die Stillstandzeiten der Vorrichtung 1 minimiert werden, sodass die Verarbeitung der Pflanzen nur für die kurze Zeit des Auswechselns des entsprechenden Balkenelementes 28 unterbrochen werden muss.

Die Abstreifeinheit 2 enthält gemäss dem vorliegenden Ausführungsbeispiel auch eine Steuereinheit 5. Die Steuereinheit 5 dient zur Steuerung der Antriebseinheit 14. Die Steuereinheit 5 kann einen Frequenzumrichter enthalten. Die Steuereinheit 5 kann mittels einer Kabelverbindung mit der Antriebseinheit 14 verbunden sein. Kabelverbindungen sind in den Darstellungen weggelassen, um die Darstellung nicht unnötig zu überladen.

In Fig. 1b ist die Einzugseinheit 3 der Vorrichtung 1 dargestellt. Zwei gegenüberliegende Rollenelemente, also hier das erste Rollenelement 11 und das zweite Rollenelement 12 bzw. das erste Rollenelement 11 und das dritte Rollenelement 13 drehen in jeweils entgegengesetzte Richtung und bilden ein erstes und zweites Rollenelementpaar 7, 8.

Sobald der Stängel oder die Stängel vom entsprechenden Rollenelementpaar 7, 8 erfasst werden, wird der Stängel zwischen den beiden Rollenelementen des ersten Rollenelementpaars 7 bzw. des zweiten Rollenelementpaars 8 eingeklemmt und von den Rollenelementen des entsprechenden Rollenelementpaars derart bewegt, dass er durch die entsprechende Öffnung 25 des entsprechenden Balkenelementes 28 des Abstreifelements 21, 22 in der Abstreifeinheit 2 in Richtung der Einzugseinheit 3 geführt wird. Blätter und/oder Blüten passen nicht durch die Öffnung 25 und werden daher vom Balkenelement 28 des Abstreifelements 21, 22 vom Stängel getrennt. Blätter oder Blüten können in einem Sammelbehälter gesammelt werden, der sich unterhalb der Öffnung 25 des entsprechenden Abstreifelementes 21, 22 der Abstreifeinheit 2 befindet. Der Sammelbehälter ist in den Abbildungen nicht dargestellt.

Damit die Stängel durch die Abstreifeinheit 2 gezogen werden können, ist es erforderlich, dass durch die Rollenelemente jedes Rollenelementpaars 7, 8 der Einzugseinheit 3 ein Anpressdruck auf den oder die Stängel erzeugt wird. Gemäss dem vorliegenden Ausführungsbeispiel liegt das erste Rollenelement 11 auf dem zweiten Rollenelement 12 auf. In analoger Weise liegt auch das dritte Rollenelement 13 auf dem zweiten Rollenelement 12 auf. Die Funktionsweise des aus dem ersten und zweiten Rollenelementen 11, 12 gebildeten ersten Rollenelementpaars 7 ist gleich der Funktionsweise des aus den dritten und zweiten Rollenelementen 12, 13 gebildeten zweiten Rollenelementpaars 8. Daher wird in der nachfolgenden Beschreibung primär auf das aus den ersten und zweiten Rollenelementen 11, 12 gebildeten ersten Rollenelementpaars 7 eingegangen.

Die Vorrichtung funktioniert in gleicher Weise, wenn nur ein einziges Rollenelementpaar vorgesehen ist. Die Vorrichtung funktioniert ebenfalls in gleicher Weise, wenn anstatt des zweiten Rollenelements 12, welches Bestandteil des ersten und zweiten Rollenelementpaars ist, zwei separate Rollenelemente vorgesehen sind. Die Verwendung des zweiten Rollenelements 12 gemäss dem vorliegenden Ausführungsbeispiel ist vorteilhaft, da die Antriebseinheit 14 im Inneren des zweiten Rollenelements angeordnet sein kann und diese Antriebseinheit 14 somit zum Antrieb des ersten und zweiten Rollenelementpaars 7, 8 dient.

Der Anpressdruck, welcher vom ersten Rollenelement 11 auf das zweite Rollenelement 12 wirkt, ist mittels einer Justiervorrichtung 41 einstellbar. Gemäss dem vorliegenden Ausführungsbeispiel enthält jedes der ersten und zweiten Rollenelementpaare 7, 8 eine eigene Justiervorrichtung 41, 43. Daher wird als Oberbegriff für sämtliche Justiervorrichtungen der Begriff Justiersystem 4 verwendet. Das Justiersystem 4 kann aus einer einzigen Justiervorrichtung bestehen, wenn die Vorrichtung über nur ein einziges Rollenelementpaar verfügt. Das Justiersystem 4 kann mehrere Justiervorrichtungen 41, 43 umfassen, wenn mehr als ein Rollenelementpaar 7, 8 vorgesehen ist.

In der Folge soll die Justiervorrichtung 41 für das erste Rollenelementpaar 7 genauer beschrieben werden. Die ebenfalls dargestellte Justiervorrichtung 43 für das zweite Rollenelementpaar 8 funktioniert in analoger Weise und wird daher nicht nochmals beschrieben, es wird auf die Beschreibung der Justiervorrichtung 41 verwiesen.

Gemäss dem vorliegenden Ausführungsbeispiel sind die Justiervorrichtung 41 und die Justiervorrichtung 43 unabhängig voneinander. Gemäss einem nicht dargestellten Ausführungsbeispiel können die Justiervorrichtung 41 und die Justiervorrichtung 43 gekoppelt sein.

Mittels der Justiervorrichtung 41 ist ein Anpressdruck auf einen zwischen dem ersten Rollenelement 11 und dem zweiten Rollenelement 12 befindlichen Stängel erzeugbar.

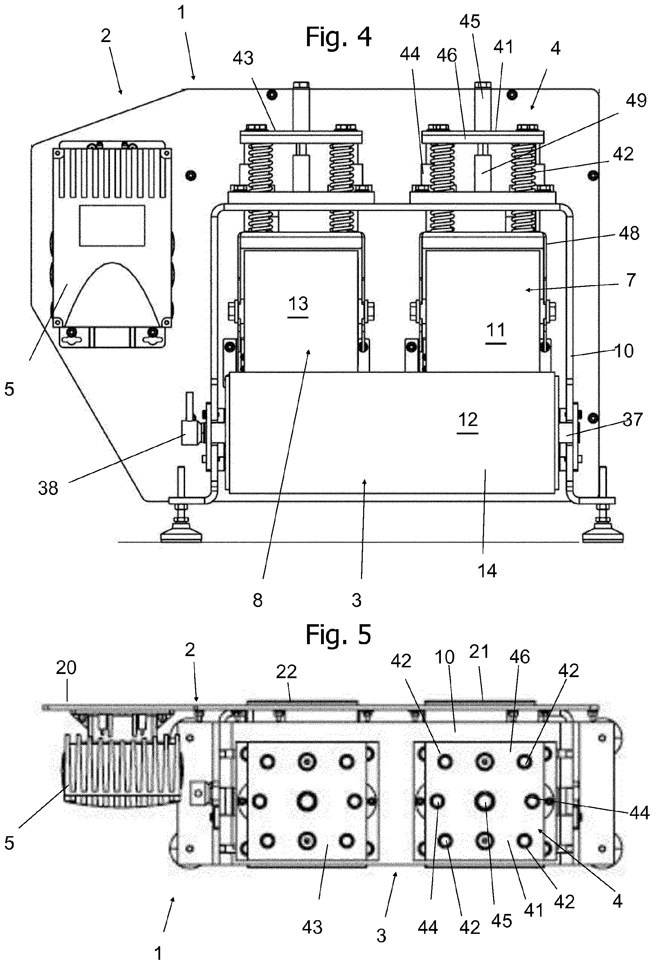

Die Justiervorrichtung 41 ist hierzu mit dem ersten Rollenelement 11 und einem Gehäuse 10 verbunden. Das zweite Rollenelement 12 ist im Gehäuse 10 drehbar gelagert. Das erste Rollenelement 11 ist in einer Halterung 48 aufgenommen, welche Bestandteil der Justiervorrichtung 41 ist. Die Justiervorrichtung enthält ein Federelement 42, ein Führungselement 44 und ein Justierelement 45. Gemäss der vorliegenden Darstellung sind exemplarisch vier Federelemente 42 gezeigt, von welchen nur eines bezeichnet ist. Gemäss der vorliegenden Darstellung sind zwei Führungselemente 44 gezeigt, von welchen nur eines bezeichnet ist. Das Federelement 42 und das Führungselement 44 sind mit je einem ersten Ende auf einem Verbindungselement 46 befestigt, welches gemäss der vorliegenden Darstellung als Verbindungsplatte ausgebildet ist. Das Federelement 42 ist an seinem zweiten Ende auf einer Halterung 48 des Rollenelements 11 befestigt. Das Führungselement 44 an seinem zweiten Ende am Gehäuse 10 befestigt. Das Justierelement 45 ist gemäss diesem Ausführungsbeispiel als ein Schraubenelement ausgebildet, welches in einer Bohrung des Verbindungselements 46 aufgenommen ist. Das Schraubenelement ist in einer Gewindebohrung im Anschlag 49 gehalten. Durch Betätigung des Schraubenelements kann der Abstand zwischen dem Gehäuse 10 und dem Verbindungselement 46 verändert werden. Die Gewindebohrung im Anschlag 49 (siehe Fig. 4) hat daher mindestens die Länge des gewünschten Justierbereichs. Der Justierbereich kann bis zu 50 mm, insbesondere bis zu 30 mm betragen. Insbesondere kann der Justierbereich bis zu 30 mm betragen. Für kleinere Vorrichtungen kann der Justierbereich bis zu 15 mm betragen.

Das Schraubenelement ragt über die Oberfläche des Verbindungselements 46 hinaus. Eine Distanzhülse ist gemäss dem vorliegenden Ausführungsbeispiel zwischen dem Schraubenkopf und dem Verbindungselement vorgesehen, um das Verbindungselement 46 in der gewünschten Position zu halten. Aufgrund seiner Länge ist das Schraubenelement einfach zugänglich. Insbesondere kann das Schraubenelement eine Einhausung der Vorrichtung überragen, sodass eine Justierung auch dann möglich ist, wenn die Vorrichtung 1 in einer Einhausung aufgenommen ist.

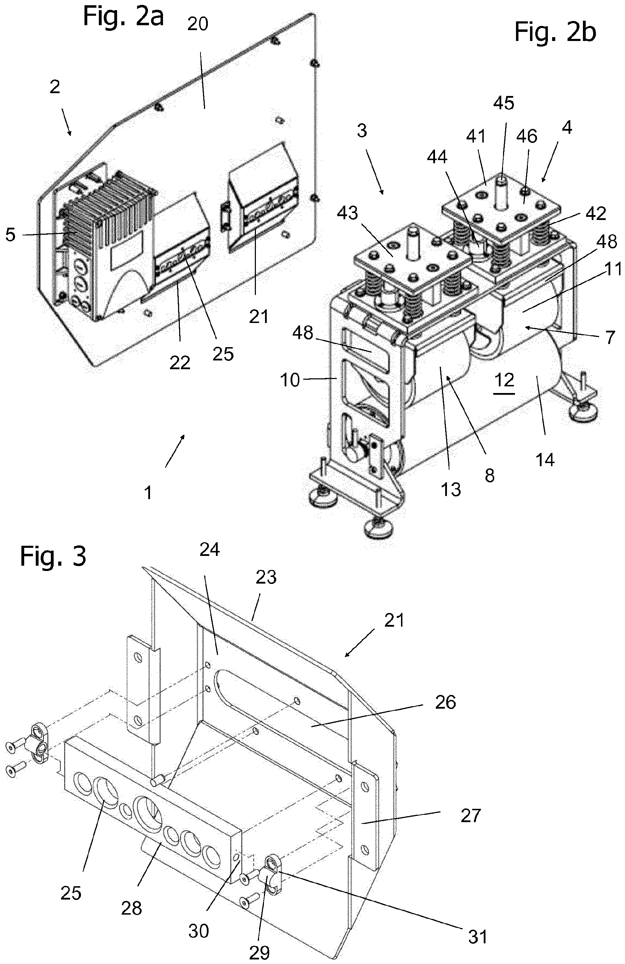

Fig. 2a zeigt eine Ansicht der Abstreifeinheit 2 für eine Vorrichtung 1 nach dem ersten Ausführungsbeispiel von der Rückseite, Fig. 2b zeigt eine Ansicht der Einzugseinheit 3 für die Vorrichtung 1 nach dem ersten Ausführungsbeispiel von der Rückseite. Für gleiche Teile werden wiederum dieselben Bezugszeichen verwendet und für die Beschreibung von deren Funktion wird auf die vorhergehende Beschreibung der Fig. 1a und Fig. 1b verwiesen.

Gemäss dem in Fig. 1a, 1b, 2a, 2b dargestellten ersten Ausführungsbeispiel der Vorrichtung 1 haben das erste und dritte Rollenelement 11, 13 denselben Durchmesser. Das erste und dritte Rollenelement 11, 13 liegen auf einer gemeinsamen Drehachse. Die Lage der Drehachse des zweiten Rollenelements 12 unterscheidet sich von der Lage der Drehachse des ersten und dritten Rollenelements 11, 13.

Die Drehrichtung der ersten und dritten Rollenelemente 11, 13 um die gemeinsame Drehachse ist gleich. Die Drehrichtung der ersten und dritten Rollenelemente 11, 13 unterscheidet sich von der Drehrichtung des zweiten Rollenelements 12. In der Darstellung gemäss Fig. 1b drehen das erste und dritte Rollenelement 11, 13 im Gegenuhrzeigersinn. Das zweite Rollenelement 12 dreht im Uhrzeigersinn, sodass die Pflanzen vom ersten und zweiten Rollenelement 11, 12, oder dem zweiten und dritten Rollenelement 12, 13 erfasst werden und von der Vorderseite der Einzugseinheit 3 auf deren Rückseite bewegt werden. Die Vorderseite der Einzugseinheit 3 ist die der Abstreifeinheit 2 zugewandte Seite.

Das zweite Rollenelement 12 weist gemäss diesem Ausführungsbeispiel eine Länge auf, die grösser als die Länge der ersten und dritten Rollenelemente 11, 13 ist. Insbesondere kann die Länge des zweiten Rollenelements 12 mindestens der Summe der Längen der ersten und dritten Rollenelemente 11, 13 entsprechen.

Die Durchmesser der ersten und dritten Rollenelemente 11, 13 können sich voneinander unterscheiden. Die Durchmesser der ersten und dritten Rollenelemente 11, 13 können sich vom Durchmesser des zweiten Rollenelements 12 unterscheiden. Nach einem Ausführungsbeispiel können die Durchmesser der ersten und dritten Rollenelemente 11, 13 gleich sein.

Jedes der Rollenelemente kann einen Belag aufweisen. Beispielsweise kann ein Belag aus Gummi verwendet werden. Der Belag kann auch ein Material umfassen, welches den Reibungswiderstand erhöht. Jedes der Rollenelemente kann nach einem zeichnerisch nicht dargestellten Ausführungsbeispiel auch eine Profilierung aufweisen.

Fig. 3 zeigt ein Detail eines Abstreifelementes 21, 22 für eine Abstreifeinheit 2 der Vorrichtung 1 nach dem ersten Ausführungsbeispiel. Für die nachfolgende Beschreibung wird nur auf das Abstreifelement 21 Bezug genommen. Das Abstreifelement 22 funktioniert in gleicher Weise. Das Abstreifelement 21, 22 umfasst eine Wanne 23, mittels welcher der Abstand des Abstreifelements 21, 22 von der in dieser Abbildung nicht dargestellten Einzugseinheit 3 verringert werden kann. Die Wanne 23 kann aus einem oder mehreren Blechelementen bestehen. Gemäss dem vorliegenden Ausführungsbeispiel schliesst an jede trapezförmige Seitenfläche eine rechteckige Seitenfläche an. Anstelle der dargestellten trapezförmigen Seitenfläche könnte die Seitenfläche auch eine andere geometrische Form aufweisen, beispielsweise rechteckig, halbreisförmig oder halbrund. Gemäss dem in Fig. 3 Ausführungsbeispiel wird die Querschnittsfläche der Wanne in Einzugsrichtung verringert. Die Wanne 23 weist einen Wannenboden 24 auf, der einen Durchbruch 26 enthält. Der Durchbruch 26 ist gemäss dem vorliegenden Ausführungsbeispiel als Langloch ausgebildet. Die trapezförmigen Seitenflächen sind gemäss diesem Ausführungsbeispiel mit je einem Flansch 27 versehen, der zur Befestigung der Wanne an der Abdeckung 20 dient. Auf den Flansch 27 kann auch in einem nicht dargestellten Ausführungsbeispiel verzichtet werden. Der Durchbruch 26 wird von einem Balkenelement 28 abgedeckt, welches zumindest eine Öffnung 25 aufweist. Das Balkenelement 28 kann insbesondere als Lochblech ausgebildet sein. Das Balkenelement 28 gemäss der vorliegenden Darstellung enthält sieben Öffnungen 25, die eine unterschiedliche Querschnittsfläche aufweisen, um die Verarbeitung von Pflanzen mit unterschiedlicher Stängeldicke zu ermöglichen. Die Anzahl, Anordnung und die Querschnittsflächen der Öffnungen 25 sind nur exemplarisch dargestellt. Die Anzahl, Anordnung und Querschnittsflächen der Öffnungen kann sich von der vorliegenden Darstellung unterscheiden. Das Balkenelement 28 kann einfach durch ein anderes Balkenelement ausgetauscht werden. Das Balkenelement 28 ist mittels zwei an den Seitenflächen angeordneten federbelasteten Stiftelementen 29, die in eine korrespondierende Bohrung 30 des Balkenelements 28 eingreifen, in seiner Position in der Wanne 23 gehalten. Die Stiftelemente 29 sind in einem Aufnahmeelement 31 aufgenommen, welches mittels einer Schraubverbindung beispielsweise am Wannenboden 24 befestigt werden kann. Zur Absicherung wird das Balkenelement 28 mit einer Schraube versehen, was in Fig. 3 nicht gezeigt ist.

Das Stiftelement 29 ist im Aufnahmeelement 31 gehalten, wobei sich in der Bohrung des Aufnahmeelements 31 ein nicht sichtbares Federelement befindet. Das nicht dargestellte Federelement im Aufnahmeelement 31, welches dafür sorgt, dass das Stiftelement 29 in die korrespondierende Bohrung 30 eingreift, wird bei der Entnahme des Balkenelements 28 zusammengedrückt, wodurch sämtliche Stiftelemente 29 ausser Eingriff gelangen und die entsprechende Bohrung 30 freigegeben wird. Das Balkenelement 28 kann somit auf einfache Weise entnommen werden und später erneut eingesetzt werden. Wenn das Federelement nicht stark genug ist, um das Balkenelement 28 bei einem Rücklauf der Rollenelemente zu fixieren wird das Balkenelement 28 zusätzlich mit einem Fixierungselement, beispielsweise einer Schraube, fixiert, um zu verhindern, dass ein Stängel das Balkenelement 28 aus seiner Halterung stossen kann. Ein Fixierungselement kann zur Einhaltung der relevanten Sicherheitsvorschriften zwingend erforderlich sein, wenn die Federkraft des Federelements nicht ausreicht, um das Balkenelement 28 für die maximal im Betrieb auftretenden Kräfte sicher in seiner Position zu halten.

Falls der Abstand des Balkenelements 28 zu den Rollenelementen der Abstreifeinheit 3 vergrössert werden soll, kann anstelle der Wanne 23 ein ebenes Plattenelement, beispielsweise aus Blech, vorgesehen werden.

Fig. 4 zeigt eine Ansicht der Rückseite einer Vorrichtung 1 gemäss dem ersten Ausführungsbeispiel. Die Rückseite der Vorrichtung 1 ist die Seite, auf welcher die Stängel der Pflanzen ausgegeben werden. Die Stängel können von den Rollenelementen 11, 12, 13 in einen Aufnahmebehälter transportiert werden, was zeichnerisch nicht dargestellt ist. Wahlweise kann an die Rollenelemente ein Förderband anschliessen, um die Stängel beispielsweise an einen weiteren zusätzlichen Verarbeitungsprozess weiter zu leiten.

Fig. 4 zeigt die Justiervorrichtung 41 für das erste Rollenelement 11 sowie die Justiervorrichtung 43 für das dritte Rollenelement 13. In der Folge soll stellverstretend für alle Justiervorrichtungen 41, 43 auf die Justiervorrichtung 41 eingegangen werden. Mittels der Justiervorrichtung 41 kann der Anpressdruck des ersten Rollenelements 11 auf dem zweiten Rollenelement 12 eingestellt werden. Gemäss einem Ausführungsbeispiel kann im Ruhezustand das erste Rollenelement 11 mit seiner Gewichtskraft auf dem zweiten Rollenelement 12 aufliegen. Das erste Rollenelement 11 und das zweite Rollenelement 12 berühren einander, auch wenn keine Vorspannkraft auf das erste Rollenelement 11 wirkt.

Die Justiervorrichtung 41 enthält ein Federelement 42, ein Justierelement 45 sowie eine Halterung 48 für das Rollenelement 11, wobei das Federelement 42 und das Justierelement 45 auf der Halterung 48 des Rollenelements 11 und am Gehäuse 10 befestigt sind.

Insbesondere umfasst die Justiervorrichtung 41 eine Halterung 48 für das erste Rollenelement 11, mindestens ein Federelement 42, welches an seinem unteren Ende mit der Halterung 48 verbunden ist und an seinem oberen Ende an einem Verbindungselement 46 befestigt ist. Am Verbindungselement 46 ist auch ein Führungselement 44 befestigt, dessen gegenüberliegendes Ende auf der Oberseite des Gehäuses 10 befestigt ist. Das Führungselement 44 kann insbesondere als Führungsstange ausgebildet sein. Das Verbindungselement 46 befindet sich oberhalb des Gehäuses 10, sodass es einfach zugänglich ist. Jedes der Federelemente 42 wird durch eine Öffnung im Gehäuse 10 hindurchgeführt. Das erste Rollenelement 11 ist somit relativ zum Gehäuse 10 bewegbar. Wenn sich ein Stängel zwischen dem ersten Rollenelement 11 und dem zweiten Rollenelement 12 befindet, wird das Federelement 42 zusammengedrückt, wodurch sich der Anpressdruck auf den Stängel erhöht. Der Stängel wird zwischen dem ersten Rollenelement 11 und dem zweiten Rollenelement 12 eingeklemmt und entsprechend der Drehrichtung des ersten Rollenelementpaars 7 durch das Einzugselement 21 der in der vorliegenden Darstellung hinter der Abstreifeinheit liegenden Abstreifeinheit 2 hindurchgezogen.

Der Abstand zwischen dem Gehäuse 10 und dem Verbindungselement 46 wird durch das Justierelement 45 festgelegt. Das Justierelement 45 kann höhenverstellbar sein, sodass der Abstand zwischen dem Verbindungselement 46 und dem Gehäuse 10 verändert werden kann. Beispielsweise kann das Justierelement 45 ein Gewinde zur Verstellung der Höhe des Verbindungselements 46 in Bezug auf das Gehäuse 10 aufweisen. Wird dieser Abstand verringert, erhöht sich die Vorspannkraft des Federelements 42, da dieses gestaucht wird. Wird dieser Abstand vergrössert, verringert sich die Vorspannkraft des Federelements 42, da dieses entlastet wird. Ein Anschlag 49 ist vorgesehen, um den minimalen Abstand zwischen dem Verbindungselement 46 und Gehäuse 10 festzulegen. Der Anschlag 49 kann beispielsweise als Auffahrklotz ausgebildet sein. Die Differenz zwischen dem minimalen Abstand des Verbindungselements 46 vom Gehäuse und dem maximalen Abstand des Verbindungselements vom Gehäuse kann maximal 50 mm, insbesondere maximal 30 mm betragen. Die Wahl der Vorspannung der Federelemente 42 kann beispielsweise von der mittleren Dicke der zu verarbeitenden Stängel, vom Feuchtegehalt oder anderen Zustandsparametern der Pflanze abhängen. Mit zunehmender Dicke der Stängel nimmt die Vorspannkraft zu, da die Federelemente 42 stärker zusammengestaucht werden müssen, um den Durchtritt eines sehr dicken Stängels durch das entsprechende Rollenelementpaar 7, 8 zu ermöglichen.

Das oder die Federelemente 42 werden nach einem Ausführungsbeispiel bei der Montage vorgespannt.

Fig. 5 zeigt eine Aufsicht auf eine Vorrichtung 1 gemäss dem ersten Ausführungsbeispiel im zusammengebauten Zustand. Der Abstand der Abstreifeinheit 2 von der Einzugseinheit 3 ist derart gewählt, dass die Wanne 23 (siehe Fig. 3) teilweise in die Einzugseinheit 3 hineinragt. Hierdurch kann der geringstmögliche Abstand zwischen dem Wannenboden 24 der Wanne 23 (siehe Fig. 3) realisiert werden. Der Stängel muss daher nur einen kurzen Weg zurücklegen, bis er von dem entsprechenden Rollenelementpaar 7, 8 erfasst wird.

Von der Justiervorrichtung 41 und der Justiervorrichtung 43 ist das entsprechende Verbindungselement 46 von oben sichtbar. Gemäss der vorliegenden Darstellung sind exemplarisch die Befestigungsstellen für vier Federelemente 42 gezeigt. Des Weiteren enthält das Verbindungselement zwei Befestigungsstellen für die Führungselemente 44 sowie das Justierelement 45.

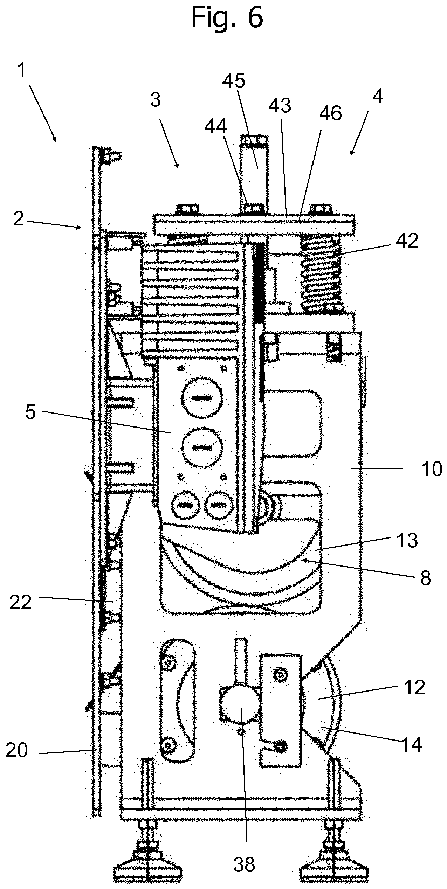

Fig. 6 zeigt eine Seitenansicht einer Vorrichtung 1 gemäss dem ersten Ausführungsbeispiel. In Fig. 2 ist sichtbar, dass das Abstreifelement 22 sich ins Innere des Gehäuses 10 erstreckt. Die Vorrichtung ist daher sehr kompakt gebaut und benötigt in Förderrichtung nur wenig Platz. Es ist denkbar, dass Vorrichtung in einem kontinuierlichen Verfahren mit automatischer Zufuhr der Pflanzen auf einer Förderstrecke positioniert werden kann. Die Fusselemente auf der Unterseite des Gehäuses 10 können abgenommen werden. Bei Bedarf kann das Gehäuse auf einem Gestell befestigt werden. Bei Bedarf können die Fusselemente durch Rollen ersetzt werden, wenn es wichtig ist, die Position der Vorrichtung öfter zu verändern.

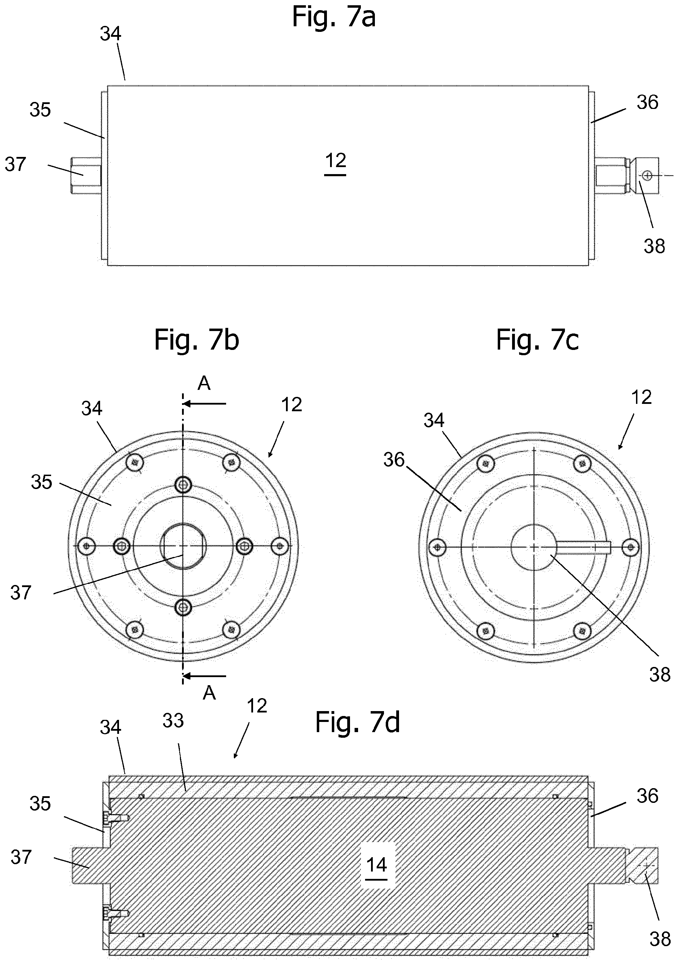

Fig. 7a zeigt ein Rollenelement nach einem der vorhergehenden Ausführungsbeispiele, beispielsweise das zweite Rollenelement 12, welches die Antriebseinheit 14 enthält. Die Antriebseinheit 14 kann beispielsweise als Trommelmotor ausgebildet sein. Wenn die Antriebseinheit 14 in das Rollenelement 12 integriert werden kann, wird hierdurch der Platzbedarf reduziert. In den vorbekannten Vorrichtungen werden die Rollen üblicherweise von einem externen Motor angetrieben, der mit den Rollen über Getriebe, Riementriebe oder dergleichen verbunden ist. Für den externen Motor, allfällige Getriebe, Riementriebe, Kettentriebe oder dergleichen wird zusätzlicher Platz benötigt. Durch die zusätzlich erforderlichen Bauteile ist auch die vorbekannte Vorrichtung komplexer aufgebaut, es gibt daher auch mehr Quellen für Störungen. Durch die im Stand der Technik zusätzlich benötigten Bauteile ist das Gewicht der vorbekannten Vorrichtungen höher als für eine Vorrichtung 1 gemäss einem der Ausführungsbeispiele der Erfindung.

Fig. 7b zeigt eine erste Seitenansicht des Rollenelements 12 gemäss Fig. 7a. In dieser Ansicht ist der Deckel 35 sichtbar, der an der Antriebseinheit 14 befestigt ist. Der Deckel 35 verdeckt die Antriebseinheit 14 sowie das Rohrelement 33, welches somit in der vorliegenden Seitenansicht nicht sichtbar ist. Das Endelement 37 dient zur Aufnahme des Rollenelements 12 im Gehäuse 10 der Einzugseinheit 3, wie in Fig. 4 gezeigt.

Fig. 7c zeigt eine zweite Seitenansicht des Rollenelements 12 gemäss Fig. 7a. In dieser Ansicht ist der Deckel 36 sichtbar, der die Antriebseinheit 14 im Rohrelement 33 hält. Der Deckel 36 verdeckt die Antriebseinheit 14 sowie das Rohrelement 33, welches somit in der vorliegenden Seitenansicht nicht sichtbar ist. Das Endelement 38 dient zur Aufnahme des Rollenelements 12 im Gehäuse 10 der Einzugseinheit 3, wie in Fig. 4 gezeigt.

Fig. 7d zeigt einen Schnitt durch das Rollenelement 12 gemäss Fig. 7a entlang der Schnittlinie A-A in Fig. 7b. Das Rollenelement 12 umfasst gemäss diesem Ausführungsbeispiel ein Rohrelement 33, auf welchem umfangsseitig ein Belag 34 aufgebracht ist. Im Innenraum des Rohrelements 33 befindet sich die Antriebseinheit 14. Die Antriebseinheit 14 wird durch einen ersten Deckel 35 und einen zweiten Deckel 36 im Rohrelement 33 gehalten. Das Rohrelement 33 ist derart mit der Antriebseinheit 14 verbunden, dass sich das Rohrelement 33 bei einer Rotationsbewegung der Antriebseinheit 14 ebenfalls dreht. Die Antriebseinheit 14 weist ein erstes Endelement 37 und ein zweites Endelement 38 auf. Das erste und zweite Endelement 37, 38 sind im Gehäuse 10 aufgenommen, was in Fig. 4 oder Fig. 6 dargestellt ist.

Gemäss einem nicht dargestellten Ausführungsbeispiel kann die Antriebseinheit 14 als Rollenelement 12 ausgebildet sein. Das Rohrelement 33, der Deckel 35 und der Deckel 36 können gemäss diesem nicht dargestellten Ausführungsbeispiel entfallen. Hierdurch kann noch zusätzlich Gewicht eingespart werden.

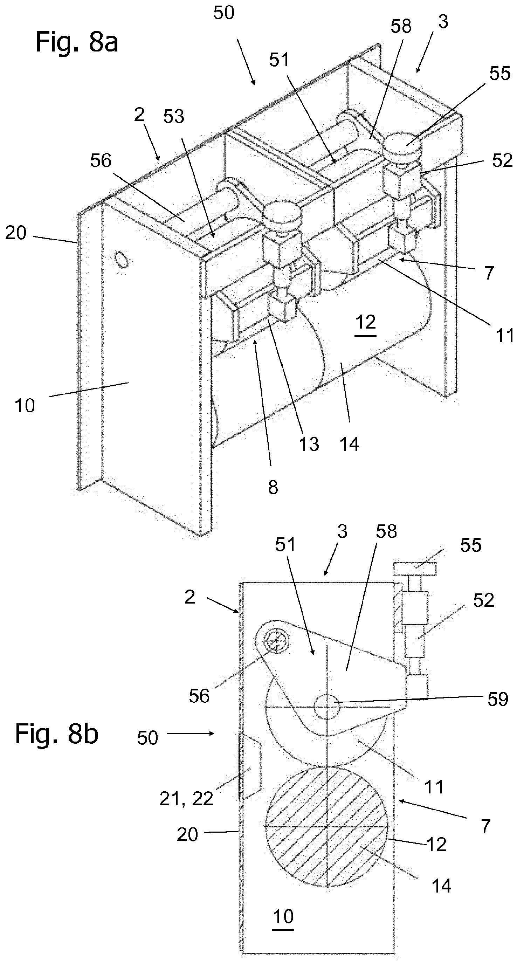

Fig. 8a zeigt eine Ansicht einer Vorrichtung 50 gemäss einem zweiten Ausführungsbeispiel. Für gleiche oder gleich wirkende Bauelemente werden dieselben Bezugszeichen wie im ersten Ausführungsbeispiel verwendet. Die Vorrichtung 50 umfasst eine Abstreifeinheit 2 und eine Einzugseinheit 3. Die Fig. 8a und Fig. 8b zeigen somit Bestandteile derselben Vorrichtung. Fig. 8a und Fig. 8b werden daher in der nachfolgenden Beschreibung gemeinsam beschrieben.

Die Vorrichtung 50 zur Verarbeitung von Pflanzen umfasst somit die Abstreifeinheit 2 zur Zufuhr eines Stängels einer zu verarbeitenden Pflanze, sowie die Einzugseinheit 3 zur Aufnahme und zum Transport des Stängels oder der Stängel. Die Einzugseinheit 3 umfasst mindestens ein erstes Rollenelement 11 und ein zweites Rollenelement 12 und mindestens eine Antriebseinheit 14 zum Antrieb zumindest eines der ersten oder zweiten Rollenelemente 11, 12. Die Einzugseinheit 3 der Vorrichtung 50 gemäss Fig. 8a umfasst ein Gehäuse 10, enthaltend ein erstes, zweites und drittes Rollenelement 11, 12, 13 mit zueinander parallel verlaufenden Drehachsen. Mindestens eine Antriebseinheit 14 zum Antrieb zumindest einer der ersten, zweiten oder dritten Rollenelemente 11, 12, 13 ist vorgesehen. Die Antriebseinheit 14 ist in der vorliegenden Darstellung nicht sichtbar, da sie sich im Inneren des zweiten Rollenelements 12 befindet. Die Antriebseinheit 14 könnte sich gemäss einem nicht dargestellten Ausführungsbeispiel auch im Inneren des ersten oder dritten Rollenelements 11, 13 befinden.

Die Abstreifeinheit 2 enthält eine Abdeckung 20, die gemäss diesem Ausführungsbeispiel als Plattenelement ausgebildet ist. Die Abdeckung 20 enthält ein oder mehrere in Fig. 8b sichtbare Abstreifelemente 21, 22 zur Zufuhr einer oder mehrerer Pflanzen. Jedes der Abstreifelemente 21, 22 weist mindestens eine Öffnung zum Einführen eines Stängels in die Vorrichtung 1 auf. Die Öffnungen können analog der Öffnungen 25 des ersten Ausführungsbeispiels für Stängel unterschiedlicher Dicke vorgesehen sein.

Die Abdeckung 20 kann einfach vom Gehäuse 10 abgenommen und bei Bedarf ausgetauscht werden. Zusätzlich kann eine Einhausung für die Einzugseinheit 3 vorgesehen sein, welche beispielsweise zum Zweck der Erhöhung der Arbeitssicherheit oder für den Lärmschutz verwendet werden kann. Diese Einhausung ist in den vorliegenden Abbildungen nicht gezeigt, um die Sicht auf die Abstreifeinheit 2 sowie die Einzugseinheit 3 der Vorrichtung 50 nicht zu beeinträchtigen.

Alternativ oder in Ergänzung hierzu kann jedes der Balkenelemente 28 abnehmbar ausgebildet sein. Wenn beispielsweise ein Balkenelement 28 verstopft oder verschmutzt ist, kann dieses Balkenelement 28 einfach ausgetauscht werden und durch ein anderes Balkenelement ersetzt werden, welches an Lager gehalten wird. Der Austausch des Balkenelementes kann innerhalb einer kurzen Zeitspanne von einigen Sekunden, insbesondere maximal 10 Sekunden, erfolgen. Der Reinigungsvorgang des verstopften oder verschmutzten Balkenelements kann zu einem beliebigen Zeitpunkt erfolgen, ohne dass hierdurch der Betrieb der Vorrichtung 50 beeinträchtigt wird. Hiermit können die Stillstandzeiten der Vorrichtung 50 minimiert werden, sodass die Verarbeitung der Pflanzen nur für die kurze Zeit des Auswechselns des entsprechenden Balkenelementes 28 unterbrochen werden muss.

Die Abstreifeinheit 2 enthält gemäss dem vorliegenden Ausführungsbeispiel auch eine Steuereinheit, die in Fig. 8a oder 8b nicht sichtbar ist. Die Steuereinheit dient zur Steuerung der Antriebseinheit 14. Die Steuereinheit kann einen Frequenzumrichter enthalten. Wiederum sind auch allfällige Kabelverbindungen zwischen der Steuereinheit und der Antriebseinheit 14 weggelassen, um die Darstellung zu vereinfachen.

Die Einzugseinheit 3 enthält zwei gegenüberliegende Rollenelemente, also hier das erste Rollenelement 11 und das zweite Rollenelement 12, die ein erstes Rollenelementpaar ausbilden bzw. das erste Rollenelement 11 und das dritte Rollenelement 13, die ein zweites Rohrelementpaar 8 ausbilden. Die Rollenelemente jedes Rollenelementpaars 7, 8 drehen in jeweils entgegengesetzte Richtung. Sobald der Stängel oder die Stängel vom entsprechenden Rollenelementpaar 7, 8 erfasst werden, wird der Stängel zwischen den beiden Rollenelementen des ersten Rollenelementpaars 7 bzw. des zweiten Rollenelementpaars 8 eingeklemmt und von den Rollenelementen des entsprechenden Rollenelementpaars derart bewegt, dass er durch die entsprechende Öffnung 25 des entsprechenden Abstreifelementes 21, 22 in der Abstreifeinheit 2 in Richtung der Einzugseinheit 3 geführt wird. Blätter und/oder Blüten passen nicht durch die Öffnung 25 und werden daher vom Abstreifelement 21, 22 vom Stängel getrennt. Blätter oder Blüten können in einem Sammelbehälter gesammelt werden, der sich unterhalb der Öffnung 25 des entsprechenden Abstreifelementes 21, 22 der Abstreifeinheit 2 befindet. Der Sammelbehälter ist in den Abbildungen nicht dargestellt.

Damit die Stängel durch die Abstreifeinheit 2 gezogen werden können, ist es erforderlich, dass durch die Rollenelemente jedes Rollenelementpaars 7, 8 der Einzugseinheit 3 ein Anpressdruck auf den oder die Stängel erzeugt wird. Gemäss dem vorliegenden Ausführungsbeispiel liegt das erste Rollenelement 11 auf dem zweiten Rollenelement 12 auf oder ist in einem Abstand angeordnet, der kleiner als die minimale Stängeldicke ist. In analoger Weise liegt auch das dritte Rollenelement 13 auf dem zweiten Rollenelement 12 auf oder ist in einem Abstand angeordnet, der kleiner als die minimale Stängeldicke ist. Die Funktionsweise des aus dem ersten und zweiten Rollenelementen 11, 12 gebildeten ersten Rollenelementpaars 7 ist gleich der Funktionsweise des aus den dritten und zweiten Rollenelementen 12, 13 gebildeten zweiten Rollenelementpaars 8. Daher wird in der nachfolgenden Beschreibung primär auf das aus den ersten und zweiten Rollenelementen 11, 12 gebildeten ersten Rollenelementpaars 7 eingegangen.

Die Vorrichtung funktioniert in gleicher Weise, wenn nur ein einziges Rollenelementpaar vorgesehen ist. Die Vorrichtung funktioniert ebenfalls in gleicher Weise, wenn anstatt des zweiten Rollenelements 12, welches Bestandteil des ersten und zweiten Rollenelementpaars ist, zwei separate Rollenelemente vorgesehen sind. Die Verwendung des zweiten Rollenelements 12 gemäss dem vorliegenden Ausführungsbeispiel ist vorteilhaft, da die Antriebseinheit 14 im Inneren des zweiten Rollenelements angeordnet sein kann und diese Antriebseinheit 14 somit zum Antrieb des ersten und zweiten Rollenelementpaars 7, 8 dient. Alternativ kann das zweite Rollenelement 12 aus zwei Rollenteilelementen bestehen, die über eine eigene Antriebseinheit 14 verfügen.

Der Anpressdruck, welcher vom ersten Rollenelement 11 auf das zweite Rollenelement 12 wirkt, ist mittels einer Justiervorrichtung 51 einstellbar. Gemäss dem vorliegenden Ausführungsbeispiel enthält jedes der ersten und zweiten Rollenelementpaare 7, 8 eine eigene Justiervorrichtung 51, 53. Der Begriff Justiersystem 4 wird als Oberbegriff für sämtliche Justiervorrichtungen aller Ausführungsbeispiele verwendet. Das Justiersystem 4 kann aus einer einzigen Justiervorrichtung bestehen, wenn die Vorrichtung über nur ein einziges Rollenelementpaar verfügt. Das Justiersystem 4 kann mehrere Justiervorrichtungen 51, 53 umfassen, wenn mehr als ein Rollenelementpaar 7, 8 vorgesehen ist.

In der Folge soll die Justiervorrichtung 51 für das erste Rollenelementpaar 7 genauer beschrieben werden. Die ebenfalls dargestellte Justiervorrichtung 53 für das zweite Rollenelementpaar 8 funktioniert in analoger Weise und wird daher nicht nochmals beschrieben, es wird auf die Beschreibung der Justiervorrichtung 51 verwiesen.

Gemäss dem vorliegenden Ausführungsbeispiel sind die Justiervorrichtung 51 und die Justiervorrichtung 53 unabhängig voneinander. Gemäss einem nicht dargestellten Ausführungsbeispiel können die Justiervorrichtung 51 und die Justiervorrichtung 53 gekoppelt sein.

Mittels der Justiervorrichtung 51 ist ein Anpressdruck auf einen zwischen dem ersten Rollenelement 11 und dem zweiten Rollenelement 12 befindlichen Stängel erzeugbar.

Die Justiervorrichtung 51 ist hierzu mit dem ersten Rollenelement 11 und einem Gehäuse 10 verbunden. Das zweite Rollenelement 12 ist im Gehäuse 10 drehbar gelagert. Das erste Rollenelement 11 ist in einer Halterung 58 aufgenommen, welche Bestandteil der Justiervorrichtung 51 ist. Die Justiervorrichtung enthält ein Federelement 52 und ein Justierelement 55. Das Federelement 52 und das Justierelement 55 sind mit je einem ersten Ende an der Halterung 58 befestigt, was in Fig. 8b gut sichtbar ist. Fig. 8b ist ein Schnitt durch die Vorrichtung gemäss Fig. 8a.

Das Federelement 52 und das Justierelement 55 sind am Gehäuse 10 befestigt. Das erste Rollenelement 11 ist drehbar in der Halterung 58 aufgenommen. Die Halterung 58 enthält ein Gelenkelement 56, wobei die Halterung 58 um das Gelenkelement 56 schwenkbar ist. Das Gelenkelement 56 kann als eine Gelenkstange ausgebildet sein, die im Gehäuse 10 gehalten ist.

Das Federelement 52 kann mittels des Justierelements 55 derart vorgespannt werden, dass ein definierter Anpressdruck des ersten Rollenelements 11 auf das zweite Rollenelement 12 erzeugbar ist. Wenn ein Stängel vom ersten Rollenelementpaar 7 erfasst wird, wird das erste Rollenelement 11 geringfügig angehoben, damit der Stängel im Zwischenraum zwischen dem ersten Rollenelement 11 und dem zweiten Rollenelement 12 Platz findet. Durch die Hubbewegung des ersten Rollenelements 11 wird das Federelement 52 zusammengedrückt, wodurch der Druck des ersten Rollenelements 11 auf den Stängel erhöht wird. Der Stängel kann somit zwischen dem ersten Rollenelement 11 und dem zweiten Rollenelement 12 eingeklemmt werden. Das erste Rollenelement 11 ist in der Halterung 58 drehbar gelagert. Die Achse des ersten Rollenelements 11 ist in der Bohrung 59 der Halterung aufgenommen, was in Fig. 8b gezeigt ist.

Die Vorrichtung 1, 50 gemäss einem der vorhergehenden Ausführungsbeispiele kann gemäss einem Ausführungsbeispiel auf einem Tisch abgestellt sein. Die Vorrichtung kann gemäss einem Ausführungsbeispiel auch ein Gestell umfassen, insbesondere kann das Gestell Rollen aufweisen, sodass die Vorrichtung fahrbar ist.

Für den Fachmann ist offensichtlich, dass viele weitere Varianten zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nichtausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C bis N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Vorrichtung (1) zur Verarbeitung von Pflanzen, umfassend eine Abstreifeinheit (2) zur Zufuhr eines Stängels einer zu verarbeitenden Pflanze, sowie einer Einzugseinheit (3) zur Aufnahme und zum Transport eines Stängels der Pflanze, wobei die Einzugseinheit (3) mindestens ein erstes Rollenelement (11, 13) und ein zweites Rollenelement (12) umfasst und mindestens eine Antriebseinheit (14) zum Antrieb zumindest einer der ersten oder zweiten Rollenelemente (11, 12, 13), **dadurch gekennzeichnet, dass** der Anpressdruck, welcher vom ersten Rollenelement (11, 13) auf das zweite Rollenelement (12) wirkt, mittels eines Justiersystems (4) einstellbar ist.

2. Vorrichtung nach Anspruch 1, wobei das Justiersystem (4) eine Justiervorrichtung (41, 43, 51, 53) umfasst, wobei mittels der Justiervorrichtung ein Anpressdruck auf einen zwischen dem ersten Rollenelement (11, 13) und dem zweiten Rollenelement (12) befindlichen Stängel erzeugbar ist.

3. Vorrichtung nach einem der Ansprüche 1 oder 2, wobei die Justiervorrichtung (41, 43, 51, 53) mit dem ersten Rollenelement (11, 13) und einem ortsfesten Gehäuse (10) verbunden ist.

4. Vorrichtung nach Anspruch 3, wobei die Justiervorrichtung (41, 43, 51, 53) ein Federelement (42, 52) und ein Justierelement (45, 55) enthält, wobei das Federelement (42, 52) und das Justierelement (45, 55) auf einer Halterung (48, 58) des Rollenelements (11, 13) und am Gehäuse (10) befestigt sind.

5. Vorrichtung nach einem der vorhergehenden Ansprüche, wobei die Antriebseinheit (14) im Inneren eines der ersten oder zweiten Rollenelemente (11, 12, 13) angeordnet ist.

6. Vorrichtung nach einem der vorhergehenden Ansprüche, wobei die Abstreifeinheit (2) zumindest ein Abstreifelement (21, 22) enthält, wobei das Abstreifelement (21, 22) mindestens eine Öffnung (25) zur Einführung eines Stängels der Pflanze enthält.

7. Vorrichtung nach Anspruch 6, wobei das Abstreifelement (21, 22) ein Balkenelement (28) umfasst, welches die Öffnung (25) enthält, wobei das Balkenelement (28) abnehmbar ist.

8. Vorrichtung nach einem der vorhergehenden Ansprüche, wobei die Abstreifeinheit (2) von der Einzugseinheit (3) trennbar ist.

9. Vorrichtung nach einem der vorhergehenden Ansprüche, wobei das erste Rollenelement (11) und das zweite Rollenelement (12) zueinander parallel verlaufende Drehachsen aufweisen.

10. Vorrichtung nach einem der vorhergehenden Ansprüche, wobei das zweite Rollenelement (12) eine Breite aufweist, die grösser oder gleich der Breite des ersten Rollenelements (11) ist.

11. Vorrichtung nach einem der vorhergehenden Ansprüche, wobei ein drittes Rollenelement (13) vorgesehen ist.

12. Vorrichtung nach Anspruch 11, wobei das dritte Rollenelement (13) eine Drehachse aufweist, die mit der Drehachse des ersten Rollenelements (11) übereinstimmt.

13. Vorrichtung nach einem der Ansprüche Anspruch 11 oder 12, wobei sich die Drehrichtung des ersten Rollenelements (11) oder des dritten Rollenelements (13) von der Drehrichtung des zweiten Rollenelements (12) unterscheidet.

14. Vorrichtung nach einem der vorhergehenden Ansprüche 11 bis 13, wobei sich der Durchmesser des ersten Rollenelements (11) oder des dritten Rollenelements (13) vom Durchmesser (12) des zweiten Rollenelements unterscheidet.

15. Vorrichtung nach einem der vorhergehenden Ansprüche 11 bis 14, wobei die Durchmesser der ersten und dritten Rollenelemente (11, 13) gleich sind.
